(19) Europäisches Patentamt
European Patent Office
Office européen des brevets

(11) **EP 3 615 211 B1**

(12) **FASCICULE DE BREVET EUROPEEN**

(45) Date de publication et mention de la délivrance du brevet:
**18.08.2021 Bulletin 2021/33**

(21) Numéro de dépôt: **18724475.1**

(22) Date de dépôt: **23.04.2018**

(51) Int Cl.:
***B01J 35/00*** *(2006.01)*    ***B01J 35/10*** *(2006.01)*
***B01J 35/04*** *(2006.01)*    ***B01J 19/12*** *(2006.01)*
***B01D 53/62*** *(2006.01)*

(86) Numéro de dépôt international:
**PCT/EP2018/060380**

(87) Numéro de publication internationale:
**WO 2018/197435 (01.11.2018 Gazette 2018/44)**

(54) **PROCÉDÉ DE RÉDUCTION PHOTOCATALYTIQUE DU DIOXYDE DE CARBONE METTANT EN OEUVRE UN PHOTOCATALYSEUR SOUS FORME DE MONOLITHE POREUX**

PHOTOKATALYTISCHES KOHLENDIOXIDREDUKTIONSVERFAHREN UNTER VERWENDUNG EINES PHOTOKATALYSATORS IN FORM EINES PORÖSEN MONOLITHEN

PHOTOCATALYTIC CARBON DIOXIDE REDUCTION METHOD USING A PHOTOCATALYST IN THE FORM OF A POROUS MONOLITH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2017 FR 1753758**

(43) Date de publication de la demande:
**04.03.2020 Bulletin 2020/10**

(73) Titulaire: **IFP Energies nouvelles**
**92852 Rueil-Malmaison (FR)**

(72) Inventeurs:
• **BERNADET, Sophie**
**33700 Mérignac (FR)**
• **FECANT, Antoine**
**69530 Brignais (FR)**
• **UZIO, Denis**
**69600 Oullins (FR)**
• **BACKOV, Rénal-Vasco**
**33200 Bordeaux (FR)**

• **RAVAINE, Serge**
**33610 Cestas (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**FR-A1- 3 026 965**

• **TAHIR MUHAMMAD ET AL: "Photocatalytic CO2reduction and kinetic study over In/TiO2nanoparticles supported microchannel monolith photoreactor", APPLIED CATALYSIS A: GENERAL, vol. 467, 17 août 2013 (2013-08-17), pages 483-496, XP028758167, ISSN: 0926-860X, DOI: 10.1016/J.APCATA.2013.07.056 cité dans la demande**

**Description**

**Domaine technique de l'invention**

Le domaine de l'invention est celui de la réduction photocatalytique du dioxyde de carbone ($CO_2$) sous irradiation par l'emploi d'un photocatalyseur.

**Etat de la technique**

Les combustibles fossiles, comme le charbon, le pétrole et le gaz naturel, sont les principales sources d'énergie conventionnelles dans le monde en raison de leur disponibilité, de leur stabilité et de leur densité d'énergie élevée. Cependant leur combustion produit des émissions de dioxyde de carbone qui sont considérées comme la principale cause du réchauffement climatique. Ainsi, il existe un besoin croissant pour atténuer les émissions de $CO_2$, soit en le captant, soit en le transformant.

Bien que la capture et séquestration « passives » du carbone (CSC) soient généralement considérées comme un procédé efficace pour réduire les émissions de $CO_2$, d'autres stratégies peuvent être envisagées, notamment des stratégies « actives » de conversion du $CO_2$ en produits ayant une valeur économique, tels que les carburants et produits chimiques industriels.

Une telle stratégie se base sur la réduction du dioxyde de carbone en produits valorisables. La réduction du dioxyde de carbone peut être réalisée par voie biologique, thermique, électrochimique ou encore photocatalytique.

Parmi ces options, la réduction photocatalytique du $CO_2$ gagne une attention accrue car elle peut potentiellement consommer des formes alternatives d'énergie, par exemple en exploitant l'énergie solaire, qui est abondante, bon marché, et écologiquement propre et sûre.

La réduction photocatalytique du dioxyde de carbone permet d'obtenir des molécules carbonées en C1 ou plus, telles que le CO, le méthane, le méthanol, l'éthanol, le formaldéhyde, l'acide formique ou encore d'autres molécules telles que les acides carboxyliques, les aldéhydes, les cétones ou différents alcools. Ces molécules, telles le méthanol, l'éthanol, l'acide formique ou encore le méthane et tous les hydrocarbures en $C_1^+$ peuvent trouver une utilité énergétique directement.

Le monoxyde de carbone CO peut également être valorisé énergétiquement en mélange avec de l'hydrogène pour la formation de carburants par synthèse Fischer-Tropsch. Les molécules d'acides carboxyliques, d'aldéhydes, de cétones ou de différents alcools quant à elles peuvent trouver des applications dans les procédés de chimie ou de pétrochimie. Toutes ces molécules présentent donc un grand intérêt d'un point de vue industriel.

Des procédés de réduction photocatalytique du dioxyde de carbone en présence d'un composé sacrificiel sont connus dans l'état de l'art.

Halmann et al. (Solar Energy, 31, 4, 429-431, 1983) ont évalué les performances de trois semi-conducteurs ($TiO_2$, $SrTiO_3$ et $CaTiO_3$) pour la réduction photocatalytique de $CO_2$ en milieu aqueux. Ils constatent la production de formaldéhyde, d'acide formique et de méthanol.

Anpo et al. (J. Phys. Chem. B, 101, p. 2632-2636, 1997) ont étudié la réduction photocatalytique du $CO_2$ avec de la vapeur d'eau sur des photocatalyseurs à base de $TiO_2$ ancrés dans des micropores de zéolithes. Ceux-ci présentèrent une très haute sélectivité en méthanol gazeux.

Des photocatalyseurs à base de $TiO_2$ sur lesquels sont déposées des nanoparticules de platine sont connus pour convertir en méthane un mélange de $CO_2$ et d'$H_2O$ en phase gazeuse (Q-H. Zhang et al., Catal. Today, 148, p. 335-340, 2009).

Des photocatalyseurs à base de $TiO_2$ chargés avec des nanoparticules d'or sont également connus de la littérature pour la réduction photocatalytique de $CO_2$ en phase gazeuse (S.C. Roy et al., ACS Nano, 4, 3, p. 1259-1278, 2010) et en phase aqueuse (W. Hou et al., ACS Catal., 1, p. 929-936, 2011).

Il est également connu que la réduction photocatalytique de $CO_2$ en méthanol, acide formique et formaldéhyde en solution aqueuse peut être réalisée à l'aide de différents semi-conducteurs tels que ZnO, CdS, GaP, SiC ou encore $WO_3$ (T. Inoue et al., Nature, 277, p. 637-638, 1979).

Liou et al. (Energy Environ. Sci., 4, p. 1487-1494, 2011) ont utilisé des photocatalyseurs $InTaO_4$ dopé avec du NiO pour réduire le $CO_2$ en $CH_3OH$.

Sato et al. (JACS, 133, p. 15240-15243, 2011) ont étudié un système hybride alliant un semi-conducteur de type p InP et un polymère complexé au ruthénium afin d'opérer une réduction sélective de $CO_2$.

Enfin, une revue et un chapitre d'ouvrage issus de la littérature ouverte offrent un bilan exhaustif des photocatalyseurs employés en réduction photocatalytique du dioxyde de carbone : M. Tahir, N. S. Amin, Energy Conv. Manag., 76, p. 194-214, 2013 d'une part, et Photocatalysis, Topics in current chemistry 303C.A. Bignozzi Editor, Springer, p. 151-184,2011 d'autre part.

L'objet de l'invention est de proposer une voie nouvelle, durable et plus performante de production de molécules carbonées valorisables par conversion photocatalytique du dioxyde de carbone à l'aide d'une énergie électromagnétique, mettant en œuvre un photocatalyseur sous forme de monolithes poreux contenant au moins un semiconducteur. La mise en œuvre de ce type de photocatalyseurs pour la réduction photocatalytique de $CO_2$ permet d'atteindre des performances améliorées par rapport aux mises en œuvre connues pour cette réaction. En effet, il est connu de J.M. Herrmann, Topics in Catalysis Vol. 34, p. 1-4, 2005 que l'activité photocatalytique par unité de surface irradiée augmente avec la masse de photocatalyseur puis atteint un plateau. De manière surprenante, la mise en œuvre de photocatalyseur sous forme de monolithe poreux contenant au moins un semiconducteur pour la réduction photocatalytique du dioxyde de carbone permet d'augmenter l'activité par unité de surface irradiée en augmentant la masse de photocatalyseur, ce qui n'est pas le cas pour d'autres mises en forme (poudre par exemple).

Une demande de brevet WO2015/11072 décrit l'utilisation d'un matériau à base de N-TiO$_2$ sous la forme d'un monolithe poreux en tant que photocatalyseur pour la dégradation de polluants dans l'air ou dans l'eau sous rayonnement dans le spectre visible ou pour le craquage de l'eau en H$_2$ sous rayonnement dans le spectre visible. Le document FR 2975309 décrit un mode de préparation de monolithe poreux contenant du TiO$_2$ et son utilisation en tant que photocatalyseur pour la dégradation de polluants dans l'air ou dans l'eau sous irradiation.

Il est également connu de M. Tahir et N. S. Amin (Appl. Catal. A : General 467 (2013) 483-496 et Chem. Eng. J., 230 (2013) 314-327) d'utiliser un monolithe de type « nid d'abeille » contenant des canaux de taille millimétriques enduits d'un composé semiconducteur pour la réduction photocatalytique du $CO_2$. Néanmoins ce type d'objet présente une forte densité par unité de volume (de l'ordre de 0,8 à 0,9 g/mL) ce qui ne permet pas d'obtenir des surfaces spécifiques importantes.

Cependant, aucun document ne divulgue l'utilisation d'un photocatalyseur sous forme de monolithe poreux contenant au moins un semiconducteur ayant une densité apparente inférieure ou égale à 0,25 g/mL et un volume poreux de type I, dont le diamètre de pores est supérieur à 50 nm et inférieur ou égal à 1000 nm, compris entre 0,1 et 3 mL/g, dans un procédé de réduction photocatalytique du dioxyde de carbone.

## Objets de l'invention

La présente invention concerne un procédé de réduction photocatalytique du dioxyde de carbone effectué en phase liquide et/ou en phase gazeuse sous irradiation mettant en œuvre un photocatalyseur sous forme de monolithe poreux contenant au moins un semiconducteur. Ledit procédé comprend plus particulièrement les étapes suivantes :

a) on met en contact une charge contenant du dioxyde de carbone et au moins un composé sacrificiel avec un photocatalyseur se présentant sous la forme d'un monolithe poreux comprenant une densité apparente inférieure ou égale à 0,25 g/mL et un volume macroporeux de type I, dont le diamètre de pores est supérieur à 50 nm et inférieur ou égal à 1000 nm, compris entre 0,1 et 3 mL/g ;

b) on irradie le photocatalyseur par au moins une source d'irradiation produisant au moins une longueur d'onde inférieure à la largeur de bande interdite dudit photocatalyseur de manière à réduire le dioxyde de carbone et oxyder le composé sacrificiel en présence dudit photocatalyseur activé par ladite source d'irradiation, de manière à produire un effluent contenant au moins en partie des molécules carbonées en C1 ou plus, différentes du $CO_2$.

La densité apparente se calcule en faisant le ratio entre la masse de catalyseur et son volume géométrique.

Selon une variante, et lorsque le procédé est effectué en phase gazeuse, le composé sacrificiel est un composé gazeux choisi parmi l'eau, l'ammoniaque, l'hydrogène, le méthane et un alcool.

Selon une variante, et lorsque le procédé est effectué en phase liquide, le composé sacrificiel est un composé soluble dans la phase liquide choisi parmi l'eau, l'ammoniaque, un alcool, un aldéhyde ou une amine.

Selon une variante, un fluide diluant est présent dans les étapes a) et/ou b).

Selon une variante, la source d'irradiation est une source d'irradiation artificielle ou naturelle. Selon une variante, ledit photocatalyseur sous forme de monolithe poreux possède un volume mésoporeux, dont le diamètre de pore est supérieur à 0,2 nm et inférieur ou égal à 50 nm, compris entre 0,01 et 1 mL/g, de préférence entre 0,05 et 0,5 mL/g.

Ledit photocatalyseur sous forme de monolithe poreux possède un volume macroporeux de type I, i.e. un volume macroporeux dont le diamètre des pores est supérieur à 50 nm et inférieur ou égal à 1000 nm (1 $\mu$m), compris entre 0,1 à 3 mL/g, de préférence entre 0,2 et 2,5 mL/g.

Selon une variante, ledit photocatalyseur sous forme de monolithe poreux possède un volume macroporeux de type II, i.e. un volume macroporeux dont le diamètre des pores est supérieur à 1 $\mu$m et inférieur ou égal à 10 $\mu$m, compris entre 0,1 à 8 mL/g pour un diamètre, de préférence entre 0,5 et 8 mL/g.

Selon une variante préféré, ledit photocatalyseur sous forme de monolithe poreux possède une macroporosité de type I et/ou une mésoporosité et/ou une macroporosité de type II. Selon une variante, ledit photocatalyseur sous forme de monolithe poreux possède en outre un volume macroporeux, dont le diamètre de pore est supérieur à 10 $\mu$m,

inférieur à 0,5 mL/g.

Selon une variante préférée, ledit photocatalyseur sous forme de monolithe poreux possède une densité apparente comprise entre 0,05 et 0,25 g/mL.

Les volumes macroporeux et des mésoporeux sont mesurés par porosimétrie par intrusion de mercure selon la norme ASTM D4284-83 à une pression maximale de 4000 bar, utilisant une tension de surface de 484 dyne/cm et un angle de contact de 140°.

Selon une variante, ledit photocatalyseur sous forme de monolithe poreux possède une surface spécifique (mesurée selon la norme ASTM D 3663-78 établie à partir de la méthode Brunauer, Emmett, Teller, i.e. méthode BET, telle que définie dans S.Brunauer, P.H.Emmett, E.Teller, J. Am. Chem. Soc., 1938, 60 (2), pp 309-319.) comprise entre 10 et 1000 $m^2$/g, de manière préférée entre 50 et 600 $m^2$/g.

Selon une variante, ledit photocatalyseur sous forme de monolithe poreux comprend au moins un semiconducteur dilué au sein d'au moins une phase inorganique n'absorbant pas les photons d'énergie supérieure à 4 eV. De manière préférée, la phase inorganique contient de la silice ou de l'alumine.

Selon un mode de réalisation préféré, le photocatalyseur sous forme de monolithe est constitué par le semiconducteur.

Selon une variante préférée, lorsque ledit photocatalyseur sous forme de monolithe poreux comprend au moins un semiconducteur dispersé au sein d'au moins une phase inorganique n'absorbant pas les photons d'énergie supérieure à 4 eV, la teneur en semiconducteur est comprise entre 5 et 70% en poids par rapport au poids total du photocatalyseur.

Selon une variante, ledit photocatalyseur peut contenir au moins un élément M choisis parmi un élément des groupes VIIIB, IB et IIIA de la classification périodique des éléments à l'état métallique. De manière préférée, la teneur en élément(s) M à l'état métallique est comprise entre 0,001 et 20% en poids par rapport au poids total du photocatalyseur.

De préférence, le semiconducteur dudit photocatalyseur est choisi parmi le $TiO_2$, le ZnO, $Cu_2O$, le CuO, le $Ce_2O_3$, le $CeO_2$, l'$In_2O_3$, le SiC, le ZnS, et l'$In_2S_3$, seul ou en mélange.

## Description détaillée de l'invention

### Définitions

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

On entend par composé sacrificiel un composé oxydable. Le composé sacrificiel peut être sous forme gazeuse ou liquide.

On entend par « molécules carbonées en C1 ou plus » des molécules issues de la réduction du $CO_2$ contenant un ou plus d'atome de carbone, à l'exception du $CO_2$. De telles molécules sont par exemple le CO, le méthane, le méthanol, l'éthanol, le formaldéhyde, l'acide formique ou encore d'autre molécules telles que des hydrocarbures, des acides carboxyliques, les aldéhydes, les cétones ou différents alcools.

Dans la présente description, on entend, selon la convention IUPAC, par micropores les pores dont le diamètre est inférieur à 2 nm; mésopores les pores dont le diamètre est supérieur à 2 nm et inférieur ou égal à 50 nm et macropores les pores dont le diamètre est supérieur à 50 nm, et plus particulièrement macropores de type I les pores dont le diamètre est supérieur à 50 nm et inférieur ou égale à 1000 nm (1 $\mu$m), et macropores de type II les pores dont le diamètre est supérieure à 1 $\mu$m et inférieur ou égal à 10 $\mu$m.

### Description

La présente invention a pour objet un procédé de réduction photocatalytique du dioxyde de carbone effectué en phase liquide et/ou en phase gazeuse sous irradiation mettant en œuvre un photocatalyseur sous forme de monolithe poreux contenant au moins un semiconducteur, lequel procédé comprend les étapes suivantes :

a) on met en contact une charge contenant du dioxyde de carbone et au moins un composé sacrificiel avec un photocatalyseur se présentant sous la forme d'un monolithe poreux comprenant une densité apparente comprise inférieure ou égale à 0,25 g/mL et un volume macroporeux de type I, dont le diamètre de pores est supérieur à 50 nm et inférieur ou égal à 1000 nm, compris entre 0,1 et 3 mL/g ;

b) on irradie le photocatalyseur par au moins une source d'irradiation produisant au moins une longueur d'onde inférieure à la largeur de bande interdite dudit photocatalyseur de manière à réduire le dioxyde de carbone et oxyder le composé sacrificiel en présence dudit photocatalyseur activé par ladite source d'irradiation, de manière à produire un effluent contenant au moins en partie des molécules carbonées en C1 ou plus, différentes du $CO_2$. Selon l'étape

a) du procédé selon l'invention, on met en contact une charge contenant ledit dioxyde de carbone et au moins un composé sacrificiel avec ledit photocatalyseur.

Le procédé selon l'invention peut être effectué en phase liquide et/ou en phase gazeuse.

La charge traitée selon le procédé se présente sous forme gazeuse, liquide ou biphasique gazeuse et liquide.

Lorsque la charge se présente sous forme gazeuse, le $CO_2$ est présent sous sa forme gazeuse en présence de tous composés sacrificiels gazeux seuls ou en mélange. Les composés sacrificiels gazeux sont des composés oxydables tels que l'eau ($H_2O$), l'hydrogène ($H_2$), le méthane ($CH_4$) ou encore les alcools. De manière préférée, les composés sacrificiels gazeux sont l'eau ou l'hydrogène. Lorsque la charge se présente sous forme gazeuse, le $CO_2$ et le composé sacrificiel peuvent être dilués par un fluide diluant gazeux tel que $N_2$ ou Ar.

Lorsque la charge se trouve sous forme liquide, celle-ci peut être sous forme d'un liquide ionique, organique ou aqueux. La charge sous forme liquide est préférentiellement aqueuse. En milieu aqueux, le $CO_2$ est alors solubilisé sous forme d'acide carbonique aqueux ($H_2CO_3$), d'hydrogénocarbonate ou de carbonate. Les composés sacrificiels sont des composés oxydables liquides ou solides solubles dans la charge liquide, tels que l'eau ($H_2O$), les alcools, les aldéhydes, les amines. De manière préférée, le composé sacrificiel est l'eau. Lorsque la charge liquide est une solution aqueuse, le pH est généralement compris entre 1 et 9, de préférence entre 2 et 7. Eventuellement, et afin de moduler le pH de la charge liquide aqueuse, un agent basique ou acide peut être ajouté à la charge. Lorsqu'un agent basique est introduit il est sélectionné de préférence parmi les hydroxydes d'alcalins ou d'alcalinoterreux, les bases organiques telles que des amines ou de l'ammoniaque. Lorsqu'un agent acide est introduit il est sélectionné de préférence parmi les acides inorganiques tels que l'acide nitrique, sulfurique, phosphorique, chlorhydrique, bromhydrique ou les acides organiques tels que des acides carboxyliques ou sulfoniques.

Eventuellement, lorsque la charge liquide est aqueuse, celle-ci peut contenir en toute quantité tout ion solvaté, tels que par exemple $K^+$, $Li^+$, $Na^+$, $Ca^{2+}$, $Mg^{2+}$, $SO_4^{2-}$, $Cl^-$, $F^-$, $NO_3^{2-}$.

Lorsque le procédé est effectué en phase liquide ou en phase gazeuse, un fluide diluant, respectivement liquide ou gazeux, peut être présent dans le milieu réactionnel. La présence d'un fluide diluant n'est pas requis pour la réalisation de l'invention, cependant il peut être utile d'en adjoindre à la charge pour assurer la dispersion de la charge dans le milieu, la dispersion du photocatalyseur, un contrôle de l'adsorption des réactifs/produits à la surface du photocatalyseur, un contrôle de l'absorption des photons par le photocatalyseur, la dilution des produits pour limiter leur recombinaison et autres réactions parasites du même ordre. La présence d'un fluide diluant permet aussi le contrôle de la température du milieu réactionnel pouvant ainsi compenser l'éventuelle exo/endo-thermicité de la réaction photocatalysée. La nature du fluide diluant est choisie de telle façon que son influence soit neutre sur le milieu réactionnel ou que son éventuelle réaction ne nuise pas à la réalisation de la réduction souhaitée du dioxyde de carbone. A titre d'exemple, on peut choisir de l'azote en tant que fluide diluant gazeux.

La mise en contact de la charge contenant le dioxyde de carbone et du photocatalyseur peut se faire par tout moyen connu de l'homme du métier. De manière préférée, la mise en contact de la charge de dioxyde de carbone et du photocatalyseur se fait en lit fixe traversé ou en lit fixe léchant.

Lorsque la mise en œuvre est en lit fixe traversé, ledit photocatalyseur est préférentiellement fixé au sein du réacteur, et la charge contenant le dioxyde de carbone à convertir sous forme gazeuse et/ou liquide est envoyée à travers le lit photocatalytique.

Lorsque la mise en œuvre est en lit fixe léchant, le photocatalyseur est préférentiellement fixé au sein du réacteur et la charge contenant le dioxyde de carbone à convertir sous forme gazeuse et/ou liquide est envoyée sur le lit photocatalytique.

Lorsque que la mise en œuvre est en lit fixe ou en lit léchant, la mise en œuvre peut se faire en continu.

Le photocatalyseur sous forme de monolithe poreux comprend au moins un semiconducteur.

L'emploi de ce type de photocatalyseur monolithe dans une réaction de réduction photocatalytique de $CO_2$ permet de manière surprenante d'obtenir des performances photocatalytiques améliorées par rapport aux photocatalyseurs connus de l'état de la technique ne se présentant pas sous la forme de monolithe poreux.

Le(s) semi-conducteur(s) constitutifs dudit photocatalyseur sont indépendamment choisis parmi les semi-conducteurs inorganiques, organiques ou organique-inorganique. La largeur de bande interdite des semi-conducteurs inorganiques, organiques ou hybrides organiques-inorganiques est généralement comprise entre 0,1 et 4,0 eV.

Selon une première variante, un semi-conducteur inorganique peut être choisi parmi un ou plusieurs éléments du groupe IVA, tels que le silicium, le germanium, le carbure de silicium ou le silicium-germanium. Ils peuvent être également composés d'éléments des groupes IIIA et VA, tels que GaP, GaN, InP et InGaAs, ou d'éléments des groupes IIB et VIA, tels que CdS, ZnO et ZnS, ou d'éléments des groupes IB et VIIA, tels que CuCl et AgBr, ou d'éléments des groupes IVA et VIA, tels que PbS, PbO, SnS et PbSnTe, ou d'éléments des groupes VA et VIA, tels que $Bi_2Te_3$ et $Bi_2O_3$, ou d'éléments des groupes IIB et VA, tels que $Cd_3P_2$, $Zn_3P_2$ et $Zn_3As_2$, ou d'éléments des groupes IB et VIA, tels que CuO, $Cu_2O$ et $Ag_2S$, ou d'éléments des groupes VIIIB et VIA, tels que CoO, PdO, $Fe_2O_3$ et NiO, ou d'éléments des groupes VIB et VIA, tels que $MoS_2$ et $WO_3$, ou d'éléments des groupes VB et VIA, tels que $V_2O_5$ et $Nb_2O_5$, ou d'éléments

des groupes IVB et VIA, tels que $TiO_2$ et $HfS_2$, ou d'éléments des groupes IIIA et VIA, tels que $In_2O_3$ et $In_2S_3$, ou d'éléments des groupes VIA et des lanthanides, tels que $Ce_2O_3$, $Pr_2O_3$, $Sm_2S_3$, $Tb_2S_3$ et $La_2S_3$, ou d'éléments des groupes VIA et des actinides, tels que $UO_2$ et $UO_3$.

De manière préférée, un semi-conducteur est choisi parmi le $TiO_2$, le ZnO, $Cu_2O$, le CuO, le $Ce_2O_3$, le $CeO_2$, l'$In_2O_3$, le SiC, le ZnS, et l'$In_2S_3$, seul ou en mélange

Le semi-conducteur peut éventuellement être dopé avec un ou plusieurs éléments choisis parmi des éléments métalliques, tels que par exemple des éléments V, Ni, Cr, Mo, Fe, Sn, Mn, Co, Re, Nb, Sb, La, Ce, Ta, Ti, des éléments non-métalliques, tels que par exemple C, N, S, F, P, ou par un mélange d'éléments métalliques et non-métalliques.

Selon une autre variante, un semi-conducteur est choisi parmi les semi-conducteurs organiques. Lesdits semi-conducteurs organiques peuvent être le tétracène, l'anthracène, le polythiophène, le polystyrènesulfonate, les phosphyrènes et les fullerènes.

Selon une autre variante, un semi-conducteur est choisi parmi les semi-conducteurs organiques-inorganiques. Parmi les semi-conducteurs organiques-inorganiques, on peut citer les solides cristallisés de type MOF (pour Metal Organic Frameworks selon la terminologie anglo-saxonne). Les MOFs sont constitués de sous-unités inorganiques (métaux de transition, lanthanides...) et connectées entre elles par des ligands organiques (carboxylates, phosphonates, imidazolates...), définissant ainsi des réseaux hybrides cristallisés, parfois poreux.

Selon une autre variante, un semi-conducteur peut être sensibilisé en surface avec toutes molécules organiques susceptibles d'absorber des photons.

Selon une variante, ledit photocatalyseur sous forme de monolithe poreux est constitué par le semiconducteur sous forme de monolithe.

Selon une variante, ledit photocatalyseur sous forme de monolithe poreux comprend au moins un semiconducteur dispersé au sein d'au moins une phase inorganique n'absorbant pas les photons d'énergie supérieure à 4 eV. De manière préférée, la phase inorganique de dilution contient de la silice ou de l'alumine.

Selon une variante préférée, lorsque ledit photocatalyseur sous forme de monolithe poreux comprend au moins un semiconducteur dilué au sein d'au moins une phase inorganique n'absorbant pas les photons d'énergie supérieure à 4 eV, la teneur en semiconducteur est comprise entre 5 et 70% en poids par rapport au poids total du photocatalyseur.

Selon une variante, ledit photocatalyseur peut contenir au moins un élément M choisis parmi un élément des groupes VIIIB, IB et IIIA de la classification périodique des éléments à l'état métallique. On entend par « élément à l'état métallique » un élément étant au degré d'oxydation zéro (et donc sous forme de métal). De manière préférée, la teneur en élément(s) M à l'état métallique est comprise entre 0,001 et 20% en poids par rapport au poids total du photocatalyseur.

Selon une variante, ledit photocatalyseur sous forme de monolithe poreux possède un volume mésoporeux, dont le diamètre de pore est supérieur à 0,2 nm et inférieur ou égal à 50 nm, compris entre 0,01 et 1 mL/g, de préférence entre 0,05 et 0,5 mL/g. Ledit photocatalyseur sous forme de monolithe poreux possède un volume macroporeux de type I, i.e. un volume macroporeux dont le diamètre des pores est supérieur à 50 nm et inférieur ou égal à 1000 nm (1 $\mu$m), compris entre 0,1 à 3 mL/g, de préférence entre 0,2 et 2,5 mL/g.

Selon une variante, ledit photocatalyseur sous forme de monolithe poreux possède un volume macroporeux de type II, i.e. un volume macroporeux dont le diamètre des pores est supérieur à 1 $\mu$m et inférieur ou égal à 10 $\mu$m, compris entre 0,1 à 8 mL/g pour un diamètre, de préférence entre 0,5 et 8 mL/g.

Selon une variante préféré, ledit photocatalyseur sous forme de monolithe poreux possède une macroporosité de type I et/ou une mésoporosité et/ou une macroporosité de type II.

Selon une variante, ledit photocatalyseur sous forme de monolithe poreux possède en outre un volume macroporeux, dont le diamètre de pore est supérieur à 10 $\mu$m, inférieur à 0,5 mL/g.

Selon une variante préférée, ledit photocatalyseur sous forme de monolithe poreux possède une densité apparente comprise entre 0,05 et 0,25 g/mL. La densité apparente se calcule en faisant le ratio entre la masse de catalyseur et son volume géométrique.

Selon une variante, ledit photocatalyseur sous forme de monolithe poreux possède une surface BET comprise entre 10 et 1000 $m^2$/g, de manière préférée entre 50 et 600 $m^2$/g.

Le procédé de préparation du photocatalyseur peut être n'importe quel procédé de préparation connu de l'homme du métier et adapté au photocatalyseur souhaité.

Selon une variante, le procédé de préparation du photocatalyseur comprend les étapes suivantes :

1) on mélange une solution contenant un tensioactif avec une solution acide ;

2) on ajoute à la solution obtenue à l'étape 1) au moins un précurseur soluble de support inorganique n'absorbant pas les photons d'énergie supérieure à 4 eV ou un précurseur de semiconducteur inorganique absorbant les photons d'énergie comprise entre 0,1 et 4 eV ;

3) éventuellement, on ajoute à la solution obtenue à l'étape 2) au moins un composé organique liquide, non miscible à la solution obtenue à l'étape 2) pour former une émulsion ;

4) on laisse maturer à l'état humide la solution obtenue à l'étape 2) ou l'émulsion obtenue à l'étape 3) pour obtenir un gel ;

5) on lave le gel obtenu à l'étape 4) avec une solution organique ;

6) on sèche et on calcine le gel obtenu à l'étape 5) pour obtenir un monolithe poreux ;

7) on imprègne une solution comprenant au moins un précurseur soluble de semiconducteur dans la porosité du monolithe poreux obtenu à l'étape 6) lorsque à l'étape 2) on ajoute à la solution obtenue à l'étape 1) au moins un précurseur soluble de support inorganique n'absorbant pas les photons d'énergie supérieure à 4 eV, ou on imprègne optionnellement une solution comprenant au moins un précurseur soluble de semiconducteur dans la porosité du monolithe poreux obtenu à l'étape 6) lorsque à l'étape 2) on ajoute à la solution obtenue à l'étape 1) au moins un précurseur de semiconducteur inorganique absorbant les photons d'énergie comprise entre 0,1 et 4 eV, ledit précurseur étant identique ou différent dudit précurseur moléculaire introduit à l'étape 2) ;

8) éventuellement, on sèche et on calcine le produit obtenu à l'étape 7) pour obtenir un monolithe poreux.

Les étapes sont décrites en détail ci-après.

Etape 1)

Lors de l'étape 1) du procédé de préparation du photocatalyseur, on mélange une solution contenant un tensioactif avec une solution aqueuse acide pour obtenir une solution aqueuse acide comprenant un tensioactif.
Le tensioactif peut être anionique, cationique, amphotère ou non-ionique, de manière préféré le tensioactif est un poly(ethylène glycol), le bromure de cetyl triméthylammonium, ou le bromure de myristyltriméthylammonium. L'agent acide est sélectionné de préférence parmi les acides inorganiques tels que l'acide nitrique, sulfurique, phosphorique, chlorhydrique, bromhydrique ou les acides organiques tels que des acides carboxyliques ou sulfoniques, seuls ou en mélange. Le pH du mélange est de préférence inférieur à 4.

Etape 2)

Lors de l'étape 2) du procédé de préparation du photocatalyseur, on ajoute au moins un précurseur soluble de support inorganique n'absorbant pas les photons d'énergie supérieure à 4 eV ou un précurseur de semiconducteur inorganique absorbant les photons d'énergie comprise entre 0,1 et 4 eV
Lorsque le précurseur moléculaire est un précurseur de support inorganique n'absorbant pas les photons d'énergie supérieure à 4 eV, on choisit un précurseur de type alcoolate de préférence parmi l'isopropylate d'aluminium, le tertiobutylate d'aluminium, le tetraethylorthosilicate ou le tetraméthylorthosilicate, seuls ou en mélange.
Lorsque le précurseur moléculaire est un précurseur de semiconducteur inorganique absorbant les photons d'énergie comprise entre 0,1 et 4 eV, on choisit un précurseur alcoolate de préférence parmi l'isopropylate de titane ou le tetreethylorthotitanate, seuls ou en mélange.
Eventuellement, il est possible d'ajouter au précurseur alcoolate de support et/ou de semiconducteur inorganique, un autre précurseur de semiconducteur inorganique de type ionique ou sol colloïdal.
De préférence, le ratio en masse précurseurs / tensioactif est compris entre 0,1 et 10.

Etape 3) [optionnelle]

Lors de l'étape 3), on ajoute à la solution obtenue à l'étape 2) au moins un composé organique liquide, non miscible à la solution obtenue à l'étape 2) pour former une émulsion.
De manière préféré, le composé organique liquide est un hydrocarbure, ou un mélange d'hydrocarbures, possédant 5 à 15 atomes de carbone. De préférence, le ratio en masse composé organique liquide / solution obtenue à l'étape 2) est compris entre 0,2 et 5.

Etape 4)

Lors de l'étape 4), on laisse maturer à l'état humide la solution obtenue à l'étape 2) ou l'émulsion obtenue à l'étape 3) pour obtenir un gel ;

De manière préférée, la maturation est effectuée à une température comprise entre 5 et 80°C. De manière préférée, la maturation est effectuée pendant 1 à 30 jours.

### Etape 5)

Lors de l'étape 5), on lave le gel obtenu à l'étape 4) avec une solution organique.

De manière préférée la solution organique est l'acétone, l'éthanol, le méthanol, l'isopropanol, le tetrahydrofurane, l'acétate d'éthyle, l'acétate de méthyle, seuls ou en mélange. De manière préférée, l'étape de lavage est répétée plusieurs fois.

### Etape 6)

Lors de l'étape 6), on sèche et on calcine le gel obtenu à l'étape 5) pour obtenir un monolithe poreux.

De manière préférée, le séchage est effectué à une température comprise entre 5 et 80°C. De manière préférée, le séchage est effectué pendant 1 à 30 jours. Eventuellement, du papier absorbant peut être utilisé pour accélérer le séchage des matériaux.

De manière préférée, la calcination s'opère en deux étapes : un premier palier en température compris entre 120 et 250°C pendant 1 à 10 heures, puis un deuxième palier en température compris entre 300 et 950°C pendant 2 à 24 heures.

### Etape 7)

Lors de l'étape 7), on imprègne une solution comprenant au moins un précurseur soluble de semiconducteur dans la porosité du monolithe poreux obtenu à l'étape 6) lorsque à l'étape 2) on ajoute à la solution obtenue à l'étape 1) au moins un précurseur soluble de support inorganique n'absorbant pas les photons d'énergie supérieure à 4 eV, ou on imprègne optionnellement une solution comprenant au moins un précurseur soluble de semiconducteur dans la porosité du monolithe poreux obtenu à l'étape 6) lorsque à l'étape 2) on ajoute à la solution obtenue à l'étape 1) au moins un précurseur de semiconducteur inorganique absorbant les photons d'énergie comprise entre 0,1 et 4 eV, ledit précurseur étant identique ou différent dudit précurseur moléculaire introduit à l'étape 2).

De manière préférée, on effectue une étape de maturation sous atmosphère humide après l'imprégnation.

De manière préférée, on effectue ensuite une étape de séchage à une température comprise entre 5 et 80°C et pendant 0,5 à 30 jours.

De manière préférée, on effectue ensuite une étape de calcination sous air avec un premier palier en température compris entre 80 et 150°C pendant 1 à 10 heures, puis un deuxième palier en température compris entre 150 et 250°C pendant 1 à 10 heures, et enfin un troisième palier en température compris entre 300 et 950°C pendant 0,5 à 24 heures.

### Etape 8) [étape optionnelle]

Lors de l'étape 8), on sèche et on calcine le produit obtenu à l'étape 7) pour obtenir un monolithe poreux.

Le précurseur peut se trouver à l'état solubilisé en solution ou sous la forme d'un sol colloïdal.

De manière préférée, on effectue ensuite une étape de séchage à une température comprise entre 5 et 120°C et pendant 0,5 à 2 jours.

De manière préférée, on effectue ensuite une étape de calcination sous air avec un premier palier en température compris entre 120 et 250°C pendant 0,5 à 10 heures, puis un deuxième palier en température compris entre 300 et 950°C pendant 0,5 à 24 heures.

De manière préférée, on effectue ensuite une étape de réduction sous un flux d'hydrogène à une température comprise entre 100 et 600°C, pendant 0,5 à 24h.

### Etape b) du procédé selon l'invention

Selon l'étape b) du procédé selon l'invention, on irradie le photocatalyseur par au moins une source d'irradiation produisant au moins une longueur d'onde inférieure à la largeur de bande interdite dudit photocatalyseur de manière à réduire le dioxyde de carbone et oxyder le composé sacrificiel en présence dudit photocatalyseur activé par ladite source d'irradiation, de manière à produire un effluent contenant au moins en partie des molécules carbonées en C1 ou plus, différentes du $CO_2$.

La photocatalyse repose sur le principe d'activation d'un semi-conducteur ou d'un ensemble de semi-conducteurs tel que le photocatalyseur utilisé dans le procédé selon l'invention, à l'aide de l'énergie apportée par l'irradiation. La photocatalyse peut être définie comme l'absorption d'un photon, dont l'énergie est supérieure ou égale à la largeur de bande interdite ou "bandgap" selon la terminologie anglo-saxonne entre la bande de valence et la bande de conduction, qui induit la formation d'une paire électron-trou dans le semi-conducteur. On a donc l'excitation d'un électron au niveau de la bande de conduction et la formation d'un trou sur la bande de valence. Cette paire électron-trou va permettre la formation de radicaux libres qui vont soit réagir avec des composés présents dans le milieu ou alors se recombiner suivant divers mécanismes. Chaque semi-conducteur possède une différence d'énergie entre sa bande de conduction et sa bande de valence, ou "bandgap", qui lui est propre.

Un photocatalyseur composé d'un ou plusieurs semi-conducteurs peut être activé par l'absorption d'au moins un photon. Les photons absorbables sont ceux dont l'énergie est supérieure à la largeur de bande interdite, au "bandgap", des semi-conducteurs. Autrement dit, les photocatalyseurs sont activables par au moins un photon d'une longueur d'onde correspondant à l'énergie associée aux largeurs de bande interdite des semiconducteurs constituant le photocatalyseur ou d'une longueur d'onde inférieure. On calcule la longueur d'onde maximale absorbable par un semiconducteur à l'aide de l'équation suivante :

$$\lambda_{max} = \frac{h \times c}{E_g}$$

Avec $\lambda_{max}$ la longueur l'onde maximale absorbable par un semiconducteur (en m), h la constante de Planck $(4,13433559.10^{-15}$ eV.s), c la vitesse de la lumière dans le vide (299 792 458 m.s$^{-1}$) et Eg la largeur de bande interdite ou "bandgap" du semiconducteur (en eV).

Toute source d'irradiation émettant au moins une longueur d'onde adaptée à l'activation dudit photocatalyseur, c'est-à-dire absorbable par le photocatalyseur, peut être utilisée selon l'invention. On peut par exemple utiliser l'irradiation solaire naturelle ou une source d'irradiation artificielle de type laser, Hg, lampe à incandescence, tube fluorescent, plasma ou diode électroluminescente (DEL, ou LED en anglais pour Light-Emitting Diode). De manière préférée, la source d'irradiation est l'irradiation solaire.

La source d'irradiation produit un rayonnement dont au moins une partie des longueurs d'onde est inférieure à la longueur d'onde maximale absorbable ($\lambda_{max}$) par le ou les semi-conducteurs constitutifs du photocatalyseur selon l'invention. Lorsque la source d'irradiation est l'irradiation solaire, elle émet généralement dans le spectre ultra-violet, visible et infrarouge, c'est-à-dire elle émet une gamme de longueur d'onde de 280 nm à 2500 nm environ (selon la norme ASTM G173-03). De préférence, la source émet à au moins dans une gamme de longueurs d'ondes supérieure à 280 nm, de manière très préférée de 315 nm à 800 nm, ce qui inclut le spectre UV et/ou le spectre visible.

La source d'irradiation fournit un flux de photons qui irradie le milieu réactionnel contenant le photocatalyseur. L'interface entre le milieu réactionnel et la source lumineuse varie en fonction des applications et de la nature de la source lumineuse.

Dans un mode préféré lorsqu'il s'agit d'irradiation solaire, la source d'irradiation est localisée à l'extérieur du réacteur et l'interface entre les deux peut être une fenêtre optique en pyrex, en quartz, en verre organique ou toute autre interface permettant aux photons absorbables par le photocatalyseur selon l'invention de diffuser du milieu extérieur au sein du réacteur.

La réalisation de la réduction photocatalytique du dioxyde de carbone est conditionnée par la fourniture de photons adaptés au système photocatalytique pour la réaction envisagée et de ce fait n'est pas limitée à une gamme de pression ou de température spécifique en dehors de celles permettant d'assurer la stabilité du ou des produit(s). La gamme de température employée pour la réduction photocatalytique de la charge contenant le dioxyde de carbone est généralement de -10°C à + 200°C, de manière préférée de 0 à 150°C, et de manière très préférée de 0 et 100 °C. La gamme de pression employée pour la réduction photocatalytique de la charge contenant le dioxyde de carbone est généralement de 0,01 MPa à 70 MPa (0,1 à 700 bar), de manière préférée de 0,1 MPa à 2 MPa (1 à 20 bar).

L'effluent obtenu après la réaction de réduction photocatalytique du dioxyde de carbone contient d'une part au moins une molécule en C1 ou plus, différente du dioxyde de carbone issu de la réaction et d'autre part de la charge non réagie, ainsi que l'éventuel fluide diluant, mais aussi des produits de réactions parallèles tel que par exemple le dihydrogène résultant de la réduction photocatalytique d'H$_2$O lorsque ce composé est utilisé en tant que composé sacrificiel.

Les exemples suivants illustrent l'invention sans en limiter la portée.

**EXEMPLES**

Exemple 1 : Photocatalyseur A (non-conforme à l'invention) TiO$_2$ en poudre

Le photocatalyseur A est un semi-conducteur à base de TiO$_2$ commercial sous forme de poudre (Aeroxide® P25, Aldrich™, pureté > 99,5%). La granulométrie du photocatalyseur est de 21 nm et sa surface spécifique est de 52 m$^2$/g.

Exemple 2 : Photocatalyseur B (non-conforme à l'invention) $CeO_2$

Le photocatalyseur B est un semi-conducteur à base de $CeO_2$ commercial sous forme de poudre (Aldrich™, pureté 99,95%). La granulométrie du photocatalyseur est inférieure à 50 nm et sa surface spécifique est de 30 $m^2$/g.

Exemple 3 : Photocatalyseur C (conforme à l'invention) Monolithe $TiO_2$

1 g de polyethyleneglycol (Aldrich™, $M_w$ = 20000) est ajouté dans 2 mL d'eau distillée puis mélangé avec 1 mL d'une solution d'acide chlorhydrique (37% en masse, Aldrich™, pureté 97%). 1,1 g d'isopropylate de titane (Aldrich™, pureté 97%) est ajouté au mélange et l'ensemble est agité jusqu'à obtenir un mélange d'apparence monophasique.
Le mélange est ensuite coulé dans une boîte de Petri de 5,5 cm de diamètre interne, laquelle est installée dans un saturateur pendant 7 jours pour gélification.
Le gel obtenu est alors lavé à l'isopropanol (Aldrich™, pureté > 99,5%) 2 fois de suite, puis séché à température ambiante pendant 2 jours. Le gel est enfin calciné sous air en four à moufle à 180°C pendant 2h, puis à 350°C pendant 6h.
On obtient alors le photocatalyseur C sous forme d'un monolithe poreux à base de $TiO_2$.
Le photocatalyseur C présente un volume mésoporeux de 0,16 mL/g, un volume marcoporeux de type I de 0,19 mL/g et un volume macroporeux de type II de 2,3 mL/g. Le photocatalyseur C présente une surface spécifique de 64 $m^2$/g.
Le photocatalyseur C présente une densité apparente de 0,23 g/mL.

Exemple 4 : Photocatalvseur D (conforme à l'invention) monolithe $TiO_2$/$SiO_2$

1,12 g de bromure de myristyltriméthylammonium (Aldrich™, pureté > 99%) est ajouté dans 2 mL d'eau distillée puis mélangé avec 1 mL d'une solution d'acide chlorhydrique (37% en masse, Aldrich™, pureté 97%). 0,18 g d'isopropylate de titane (Aldrich™, pureté 97%) et 1,02 g de tetraethylorthosilicate (Aldrich™, pureté > 99%) sont ajoutés au mélange et l'ensemble est agité jusqu'à obtenir un mélange d'apparence monophasique.
7g de dodécane (Aldrich™, pureté > 99%) sont introduits lentement au mélange sous agitation jusqu'à formation d'une émulsion.
L'émulsion est ensuite coulée dans une boîte de Petri de 5,5 cm de diamètre interne, laquelle est installée dans un saturateur pendant 7 jours pour gélification.
Le gel obtenu est alors lavé une première fois au tetrahydrofurane anhyde (Aldrich™, pureté > 99%), puis avec un mélange tetrahydrofurane anhydre / acetone (VWR™, ACS grade) à 70/30 en volume 2 fois de suite.
Le gel est ensuite séché à température ambiante pendant 7 jours. Le gel est enfin calciné sous air en four à moufle à 180°C pendant 2h, puis à 800°C pendant 5h.
On obtient alors le photocatalyseur D sous forme d'un monolithe poreux comprenant du $TiO_2$ dans une matrice $SiO_2$.
Le photocatalyseur D présente un volume mésoporeux de 0,11 mL/g, un volume marcoporeux de type I de 0,74 mL/g et un volume macroporeux de type II de 6,4 mL/g. Le photocatalyseur D présente une surface spécifique de 82 $m^2$/g. La teneur en élément Ti mesurée par ICP-AES est de 9,18% poids ce qui fait un équivalent de 15,3 % poids du semiconducteur $TiO_2$ dans le photocatalyseur D.
Le photocatalyseur D présente une densité apparente de 0,11 g/mL.

Exemple 5 : Photocatalvseur E (conforme à l'invention) monolithe $TiO_2$/$SiO_2$

1,12 g de bromure de myristyltriméthylammonium (Aldrich™, pureté > 99%) est ajouté dans 2 mL d'eau distillée puis mélangé avec 1 mL d'une solution d'acide chlorhydrique (37% en masse, Aldrich™, pureté 97%). 1,02 g de tetraethylorthosilicate (Aldrich™, pureté > 99%) est ajouté au mélange et l'ensemble est agité jusqu'à obtenir un mélange d'apparence monophasique.
7 g de dodécane (Aldrich™, pureté > 99%) sont introduits lentement au mélange sous agitation jusqu'à formation d'une émulsion.
L'émulsion est ensuite coulée dans une boîte de Pétri de 5,5 cm de diamètre interne, laquelle est installée dans un saturateur pendant 7 jours pour gélification.
Le gel obtenu est alors lavé une première fois au tetrahydrofurane anhyde (Aldrich™, pureté > 99%), puis avec un mélange tetrahydrofurane anhydre / acetone (VWR ™, ACS grade) à 70/30 en volume 2 fois de suite.
Le gel est ensuite séché à température ambiante pendant 7 jours. Le gel est enfin calciné sous air en four à moufle à 180°C pendant 2h, puis à 650°C pendant 5h. On obtient alors un monolithe poreux à base $SiO_2$.
Une solution contenant 34 mL d'eau distillée, 44,75 mL d'isopropanol (Aldrich™, pureté > 99,5%), 10,74 mL d'acide chlorhydrique (37% en masse, Aldrich™, pureté 97%) et 10,50 mL d'isopropylate de titane (Aldrich™, pureté 97%) est préparée sous agitation. Une partie de cette solution correspondant au volume poreux est imprégné dans la porosité du monolithe, puis laissé à maturation pendant 12h. Le monolithe est ensuite séché sous atmosphère ambiante pendant 24h. L'étape est répétée une seconde fois. Le monolithe est enfin calciné sous air en four à moufle à 120°C pendant 2h, puis à 180°C pendant 2h et enfin à 400°C pendant 1h. On obtient alors un monolithe poreux comprenant du $TiO_2$ dans une matrice $SiO_2$.

Le photocatalyseur E présente un volume mésoporeux de 0,20 mL/g, un volume macroporeux de type I de 1,15 mL/g et un volume macroporeux de type II de 5,8 mL/g. Le photocatalyseur E présente une surface spécifique de 212 $m^2$/g. La teneur en élément Ti mesurée par ICP-AES est de 27,35% poids ce qui fait un équivalent de 52,1% poids de$TiO_2$ dans le photocatalyseur E.

Le photocatalyseur E présente une densité apparente de 0,14 g/mL.

Exemple 6 : Photocatalvseur F (conforme à l'invention) $CeO_2$/$SiO_2$

1,12 g de bromure de myristyltriméthylammonium (Aldrich™, pureté > 99%) est ajouté dans 2 mL d'eau distillée puis mélangé avec 1 mL d'une solution d'acide chlorhydrique (37% en masse, Aldrich™, pureté 97%). 1,02 g de tetraethylorthosilicate (Aldrich™, pureté > 99%) est ajouté au mélange et l'ensemble est agité jusqu'à obtenir un mélange d'apparence monophasique. 7 g de dodécane (Aldrich™, pureté > 99%) sont introduits lentement au mélange sous agitation jusqu'à formation d'une émulsion.

L'émulsion est ensuite coulée dans une boîte de Pétri de 5,5 cm de diamètre interne, laquelle est installée dans un saturateur pendant 7 jours pour gélification.

Le gel obtenu est alors lavé une première fois au tetrahydrofurane anhydre (Aldrich™, pureté > 99%), puis avec un mélange tetrahydrofurane anhydre / acétone (VWR ™, ACS grade) à 70/30 en volume 2 fois de suite.

Le gel est ensuite séché à température ambiante pendant 7 jours. Le gel est enfin calciné sous air en four à moufle à 180°C pendant 2h, puis à 650°C pendant 5h. On obtient alors un monolithe poreux à base $SiO_2$.

5,3 g de nitrate de cérium hexahydraté (Aldrich™, pureté 99%) sont dissous dans 95 mL d'eau distillée sous agitation. Une partie de cette solution correspondant au volume poreux est imprégnée dans la porosité du monolithe, puis laissée à maturation pendant 12h. Le monolithe est ensuite séché sous atmosphère ambiante pendant 24h. Le monolithe est enfin calciné sous air en four à moufle à 120°C pendant 2h, puis à 180°C pendant 2h et enfin à 450°C pendant 1h. On obtient alors un monolithe poreux comprenant du $CeO_2$ dans une matrice $SiO_2$.

Le photocatalyseur F présente un volume mésoporeux de 0,30 mL/g, un volume marcoporeux de type I de 1,34 mL/g et un volume macroporeux de type II de 6,7 mL/g. Le photocatalyseur F présente une surface spécifique de 257 $m^2$/g. La teneur en élément Ce mesurée par ICP-AES est de 13,03% poids ce qui fait un équivalent de 16,0% poids de $CeO_2$ dans le photocatalyseur F.

Le photocatalyseur F présente une densité apparente de 0,14 g/mL.

Exemple 7 : Mise en œuvre des photocatalyseurs en réduction photocatalytique du $CO_2$ en phase gazeuse

Les photocatalyseurs A, B, C, D, E et F sont soumis à un test de réduction photocatalytique du $CO_2$ en phase gazeuse dans un réacteur continu à lit traversé en acier muni d'une fenêtre optique en quartz et d'un fritté en face de la fenêtre optique sur lequel est déposé le solide photocatalytique.

Pour les photocatalyseurs A et B une quantité suffisante de poudre est déposée sur le fritté de manière à recouvrir l'ensemble de la surface irradiée du réacteur. Pour les photocatalyseurs C, D, E et F, les monolithes sont justes posés sur le fritté leur diamètre étant égal au diamètre du réacteur. La surface irradiée pour tous les photocatalyseurs est de 8.042477.10$^{-04}$ $m^2$. Les tests sont réalisés à température ambiante sous pression atmosphérique. Un débit de $CO_2$ de 0,3 ml/min traverse un saturateur d'eau avant d'être distribué dans le réacteur. On suit la production de gaz dihydrogène produit issu de la réduction photocatalytique indésirable de l'eau entraînée dans le saturateur et de $CH_4$ issu de la réduction du dioxyde de carbone, par une analyse de l'effluent toutes les 6 minutes par micro chromatographie en phase gazeuse. La source d'irradiation UV-Visible est fournie par une lampe Xe-Hg (Asahi™, MAX302™). La puissance d'irradiation est toujours maintenue à 80 W/$m^2$ pour une gamme de longueur d'onde comprise entre 315 et 400 nm. La durée du test est de 20 heures.

Les activités photocatalytiques sont exprimées en μmol de dihydrogène et de méthane produits par heure et par $m^2$ irradié. Il s'agit d'activités moyennes sur l'ensemble de la durée des tests. Les résultats sont reportés dans le tableau 1 (ci-après)

Tableau 1 : Performances des photocatalyseurs relatives à leur activité moyenne pour la production de dihydrogène ou de méthane à partir d'un mélange $CO_2$ et $H_2O$ en phase gazeuse

| Photocatalyseur | | Activité moyenne $CH_4$ ($\mu$mol/h/m$^2$) | Activité moyenne $H_2$ ($\mu$mol/h/m$^2$) |
|---|---|---|---|
| A (non-conforme) | $TiO_2$ | 1 | 21 |
| B (non-conforme) | $CeO_2$ | 3 | 7 |
| C (conforme) | monolithe $TiO_2$ | 56 | 10 |
| D (conforme) | monolithe $TiO_2/SiO_2$ | 17 | 8 |
| E (conforme) | monolithe $TiO_2/SiO_2$ | 93 | 13 |
| F (conforme) | monolithe $CeO_2/SiO_2$ | 78 | 6 |

Les valeurs d'activité montrent que la mise en œuvre des solides selon l'invention présente systématiquement les meilleures performances photocatalytiques et particulièrement de meilleures sélectivités vers la réduction photocatalytique du $CO_2$.

**Revendications**

1. Procédé de réduction photocatalytique du dioxyde de carbone effectué en phase liquide et/ou en phase gazeuse sous irradiation mettant en œuvre un photocatalyseur sous forme de monolithe poreux contenant au moins un semiconducteur, lequel procédé comprend les étapes suivantes :

a) on met en contact une charge contenant du dioxyde de carbone et au moins un composé sacrificiel avec un photocatalyseur se présentant sous la forme d'un monolithe poreux comprenant une densité apparente inférieure ou égale à 0,25 g/mL et un volume macroporeux de type I, dont le diamètre de pore est supérieur à 50 nm et inférieur ou égal à 1000 nm, compris entre 0,1 et 3 mL/g ;
b) on irradie le photocatalyseur par au moins une source d'irradiation produisant au moins une longueur d'onde inférieure à la largeur de bande interdite dudit photocatalyseur, ladite étape b) étant réalisée à une température comprise entre - 10°C et 200°C, et à une pression comprise entre 0,01 MPa et 70 MPa.

2. Procédé selon la revendication 1, dans lequel lorsque ledit procédé est effectué en phase gazeuse, le composé sacrificiel est un composé gazeux choisi parmi l'eau, l'ammoniaque, l'hydrogène, le méthane et un alcool.

3. Procédé selon la revendication 1, dans lequel lorsque le procédé est effectué en phase liquide, le composé sacrificiel est un composé liquide ou solide soluble choisi parmi l'eau, l'ammoniaque, un alcool, un aldéhyde ou une amine.

4. Procédé selon l'une quelconque des revendications 1 à 3, dans lequel la source d'irradiation est une source d'irradiation artificielle ou naturelle.

5. Procédé selon l'une quelconque des revendications 1 à 4, dans lequel photocatalyseur sous forme de monolithe poreux possède un volume mésoporeux, dont le diamètre de pore est supérieur à 0,2 nm et inférieur ou égal à 50 nm, compris entre 0,01 à 1 mL/g.

6. Procédé selon l'une quelconque des revendications 1 à 4, dans lequel le photocatalyseur sous forme de monolithe poreux possède un volume macroporeux de type II, dont le diamètre de pores est supérieur à 1 $\mu$m et inférieur ou égal à 10 $\mu$m, compris entre 0,1 à 8 mL/g.

7. Procédé selon l'une quelconque des revendications 5 ou 6, dans lequel le photocatalyseur sous forme de monolithe poreux comprend une mésoporosité et/ou une macroporosité de type I et/ou une macroporosité de type II.

8. Procédé selon l'une quelconque des revendications 1 à 7, dans lequel le photocatalyseur sous forme de monolithe poreux comprend un volume macroporeux, dont le diamètre de pore est supérieur à 10 $\mu$m, inférieur à 0,5 mL/g.

9. Procédé selon l'une quelconque des revendications 1 à 8, dans lequel le photocatalyseur sous forme de monolithe poreux comprend une densité apparente inférieure à 0,19 g/mL.

10. Procédé selon l'une quelconque des revendications 1 à 9, dans lequel le photocatalyseur sous forme de monolithe poreux possède une surface spécifique comprise entre 10 et 1000 m$^2$/g.

11. Procédé selon l'une quelconque des revendications 1 à 10, dans lequel le photocatalyseur sous forme de monolithe poreux comprend au moins un semiconducteur et au moins une phase inorganique contenant de la silice ou de l'alumine n'absorbant pas les photons d'énergie supérieure à 4 eV.

12. Procédé selon l'une quelconque des revendications 1 à 11, dans lequel la teneur en semiconducteur est comprise entre 5 et 70% en poids par rapport au poids total du photocatalyseur.

13. Procédé selon l'une quelconque des revendications 1 à 12, dans lequel le photocatalyseur sous forme de monolithe poreux est constitué dudit semiconducteur sous forme de monolithe.

14. Procédé selon l'une quelconque des revendications 1 à 13, dans lequel le semiconducteur est choisi parmi le TiO$_2$, le ZnO, Cu$_2$O, le CuO, le Ce$_2$O$_3$, le CeO$_2$, l'In$_2$O$_3$, le SiC, le ZnS, et l'In$_2$S$_3$, seul ou en mélange.

## Patentansprüche

1. Verfahren zur photokatalytischen Reduktion von Kohlendioxid, das in der Flüssigphase und/oder in der Gasphase unter Bestrahlung durchgeführt wird, wobei ein Photokatalysator in Form eines porösen Monoliths, der mindestens einen Halbleiter enthält, eingesetzt wird, wobei das Verfahren die folgenden Schritte umfasst:

   a) Inkontaktbringen eines Einsatzstoffs, der Kohlendioxid und mindestens eine Opferverbindung umfasst, mit einem Photokatalysator in Form eines porösen Monoliths mit einer Schüttdichte kleiner als oder gleich 0,25 g/ml und einem Typ-I-Makroporenvolumen, dessen Porendurchmesser größer als 50 nm und kleiner als oder gleich 1000 nm ist, zwischen 0,1 und 3 ml/g;
   b) Bestrahlen des Photokatalysators mit mindestens einer Bestrahlungsquelle, die mindestens eine Wellenlänge erzeugt, die kleiner ist als die Bandlücke des Photokatalysators, wobei der Schritt b) bei einer Temperatur zwischen -10 °C und 200 °C und bei einem Druck zwischen 0,01 MPa und 70 MPa durchgeführt wird.

2. Verfahren nach Anspruch 1, wobei es sich dann, wenn das Verfahren in der Gasphase durchgeführt wird, bei der Opferverbindung um eine gasförmige Verbindung handelt, die aus Wasser, Ammoniak, Wasserstoff, Methan und einem Alkohol ausgewählt wird.

3. Verfahren nach Anspruch 1, wobei es sich dann, wenn das Verfahren in der Flüssigphase durchgeführt wird, bei der Opferverbindung um eine lösliche flüssige oder feste Verbindung handelt, die aus Wasser, Ammoniak, einem Alkohol, einem Aldehyd oder einem Amin ausgewählt wird.

4. Verfahren nach einem der Ansprüche 1 bis 3, wobei es sich bei der Bestrahlungsquelle um eine künstliche oder natürliche Bestrahlungsquelle handelt.

5. Verfahren nach einem der Ansprüche 1 bis 4, wobei der Photokatalysator in Form eines porösen Monoliths ein Mesoporenvolumen, dessen Porendurchmesser größer als 0,2 nm und kleiner als oder gleich 50 nm ist, zwischen 0,01 bis 1 ml/g aufweist.

6. Verfahren nach einem der Ansprüche 1 bis 4, wobei der Photokatalysator in Form eines porösen Monoliths ein Typ-II-Makroporenvolumen, dessen Porendurchmesser größer als 1 $\mu$m und kleiner als oder gleich 10 $\mu$m ist, zwischen 0,1 bis 8 ml/g aufweist.

7. Verfahren nach Anspruch 5 oder 6, wobei der Photokatalysator in Form eines porösen Monoliths eine Mesoporosität und/oder eine Typ-I-Makroporosität und/oder eine Typ-II-Makroporosität umfasst.

8. Verfahren nach einem der Ansprüche 1 bis 7, wobei der Photokatalysator in Form eines porösen Monoliths ein Makroporenvolumen, dessen Porendurchmesser größer als 10 $\mu$m ist, von weniger als 0,5 ml/g umfasst.

9. Verfahren nach einem der Ansprüche 1 bis 8, wobei der Photokatalysator in Form eines porösen Monoliths eine Schüttdichte von weniger als 0,19 g/ml umfasst.

10. Verfahren nach einem der Ansprüche 1 bis 9, wobei der Photokatalysator in Form eines porösen Monoliths eine spezifische Oberfläche zwischen 10 und 1000 m$^2$/g aufweist.

11. Verfahren nach einem der Ansprüche 1 bis 10, wobei der Photokatalysator in Form eines porösen Monoliths mindestens einen Halbleiter und mindestens eine anorganische Phase, die Siliciumdioxid oder Aluminiumoxid enthält und keine Photonen mit einer Energie von mehr als 4 eV absorbiert, umfasst.

12. Verfahren nach einem der Ansprüche 1 bis 11, wobei der Halbleitergehalt zwischen 5 und 70 Gew.-%, bezogen auf das Gesamtgewicht des Photokatalysators, liegt.

13. Verfahren nach einem der Ansprüche 1 bis 12, wobei der Photokatalysator in Form eines porösen Monoliths aus dem Halbleiter in Monolithform besteht.

14. Verfahren nach einem der Ansprüche 1 bis 13, wobei der Halbleiter aus $TiO_2$, $ZnO$, $Cu_2O$, $CuO$, $Ce_2O_3$, $CeO_2$, $In_2O_3$, $SiC$, $ZnS$ und $In_2S_3$, alleine oder als Mischung, ausgewählt ist.

**Claims**

1. Photocatalytic carbon dioxide reduction process carried out in liquid phase and/or in gas phase with irradiation, using a photocatalyst in porous monolith form containing at least one semiconductor, said process comprising the following steps:

   a) contacting a feedstock containing carbon dioxide and at least one sacrificial compound with a photocatalyst in the form of a porous monolith comprising a bulk density less than or equal to 0.25 g/mL and a type-I macroporous volume, of which the pore diameter is greater than 50 nm and less than or equal to 1000 nm, of between 0.1 and 3 mL/g;
   b) irradiating the photocatalyst with at least one irradiation source producing at least one wavelength lower than the bandgap of said photocatalyst, said step b) being carried out at a temperature of between -10°C and 200°C, and at a pressure of between 0.01 MPa and 70 MPa.

2. Process according to Claim 1, wherein, when said process is carried out in gaseous phase, the sacrificial compound is a gaseous compound selected from water, ammonia, hydrogen, methane and an alcohol.

3. Process according to Claim 1, wherein, when the process is carried out in liquid phase, the sacrificial compound is a soluble solid or liquid compound selected from water, aqueous ammonia, an alcohol, an aldehyde or an amine.

4. Process according to any one of Claims 1 to 3, wherein the irradiation source is an artificial or natural irradiation source.

5. Process according to any one of Claims 1 to 4, wherein the photocatalyst in porous monolith form has a mesoporous volume, of which the pore diameter is greater than 0.2 nm and less than or equal to 50 nm, of between 0.01 to 1 mL/g.

6. Process according to any one of Claims 1 to 4, wherein the photocatalyst in porous monolith form has a type-II macroporous volume, of which the pore diameter is greater than 1 $\mu$nm and less than or equal to 10 $\mu$m, of between 0.1 to 8 mL/g.

7. Process according to either one of Claims 5 and 6, wherein the photocatalyst in porous monolith form comprises a mesoporosity and/or a type-I macroporosity and/or a type-II macroporosity.

8. Process according to any one of Claims 1 to 7, wherein the photocatalyst in porous monolith form comprises a macroporous volume, of which the pore diameter is greater than 10 $\mu$m, of less than 0.5 mL/g.

9. Process according to any one of Claims 1 to 8, wherein the photocatalyst in porous monolith form comprises a bulk density of less than 0.19 g/mL.

10. Process according to any one of Claims 1 to 9, wherein the photocatalyst in porous monolith form has a specific surface area of between 10 and 1000 $m^2$/g.

11. Process according to any one of Claims 1 to 10, wherein the photocatalyst in porous monolith form comprises at least one semiconductor and at least one inorganic phase containing silica or alumina not absorbing photons with an energy greater than 4 eV.

12. Process according to any one of Claims 1 to 11, wherein the semiconductor content is between 5% and 70% by weight relative to the total weight of the photocatalyst.

13. Process according to any one of Claims 1 to 12, wherein the photocatalyst in porous monolith form consists of said semiconductor in monolith form.

14. Process according to any one of Claims 1 to 13, wherein the semiconductor is selected from $TiO_2$, ZnO, $Cu_2O$, CuO, $Ce_2O_3$, $CeO_2$, $In_2O_3$, SiC, ZnS and $In_2S_3$, alone or as a mixture.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 201511072 A

- FR 2975309

**Littérature non-brevet citée dans la description**

- **HALMANN et al.** *Solar Energy,* 1983, vol. 31 (4), 429-431
- **ANPO et al.** *J. Phys. Chem. B,* 1997, vol. 101, 2632-2636
- **Q-H. ZHANG et al.** *Catal. Today,* 2009, vol. 148, 335-340
- **S.C. ROY et al.** *ACS Nano,* 2010, vol. 4 (3), 1259-1278
- **W. HOU et al.** *ACS Catal.,* 2011, vol. 1, 929-936
- **T. INOUE et al.** *Nature,* 1979, vol. 277, 637-638
- **LIOU et al.** *Energy Environ. Sci.,* 2011, vol. 4, 1487-1494

- **SATO et al.** *JACS,* 2011, vol. 133, 15240-15243
- **M. TAHIR ; N. S. AMIN.** *Energy Conv. Manag.,* 2013, vol. 76, 194-214
- Photocatalysis, Topics in current chemistry 303C. Springer, 2011, 151-184
- **J.M. HERRMANN.** *Topics in Catalysis,* 2005, vol. 34, 1-4
- **M. TAHIR ; N. S. AMIN.** *Appl. Catal. A : General,* 2013, vol. 467, 483-496
- *Chem. Eng. J.,* 2013, vol. 230, 314-327
- **S.BRUNAUER ; P.H.EMMETT ; E.TELLER.** *J. Am. Chem. Soc.,* 1938, vol. 60 (2), 309-319
- **D.R. LIDE.** CRC Handbook of Chemistry and Physics. 2000